# EUROPÄISCHE PATENTSCHRIFT

(11) **EP 3 257 706 B1**
(45) Veröffentlichungstag und Bekanntmachung des Hinweises auf die Patenterteilung: **01.05.2019**
(21) Anmeldenummer: 16194569.6
(22) Anmeldetag: 19.10.2016
(51) Int. Cl.: B60Q 7/00

(54) **WARNDREIECK-VORRICHTUNG MIT FAHRZEUG-DISTANZANGABE**
WARNING TRIANGLE WITH VEHICLE DISTANCE DISPLAY
TRIANGLE DE SIGNALISATION AVEC INDICATION DE DISTANCE POUR VÉHICULE

(30) Priorität: 21.10.2015 DE 102015117924
(43) Veröffentlichungstag der Anmeldung: 20.12.2017
(73) Patentinhaber: Fink SAFETY GmbH, 89081 Ulm (DE); Bremicker Verkehrstechnik GmbH & Co. KG, 82362 Weilheim (DE)
(72) Erfinder: Dopfer, Herbert, 82380 Peißenberg (DE); Borst, Matthias, 89081 Ulm (DE); Fietkau, Jürgen, 89075 Ulm (DE)
(74) Vertreter: Kiessling, Christian

(56) Entgegenhaltungen:
- DE-A1-102010 046 522
- DE-A1-102010 053 155
- DE-A1-102013 104 990
- DE-C1- 3 807 300
- US-A- 4 801 918

## Beschreibung

Die Erfindung betrifft eine Warndreieck-Vorrichtung mit einem portablen Warndreieck mit einer grafisch entsprechend den Vorgaben der der gesetzlichen Normen gestalteten Oberfläche.

Warndreieck-Vorrichtungen der eingangs genannten Art sind im Stand der Technik seit langem bekannt und werden zur Markierung von am Rand öffentlicher Straßen abgestellter, liegen gebliebener oder in einen Unfall verwickelter Fahrzeuge verwendet. Die DE 102010053155 A1 und DE 3807300 C1 offenbaren Warndreieck-Vorrichtungen des Stands der Technik.

Die bekannten Warndreieck-Vorrichtungen weisen indes eine Reihe praktischer Nachteile auf. Zuförderst sei darauf hingewiesen, dass eine vorschriftkonforme Platzierung eines Warndreiecks in vorgegebener Distanz zu einem abgestellten Fahrzeug insbesondere bei Dunkelheit oder schlechten Sichtverhältnissen aufgrund von Regen oder Nebel Schwierigkeiten bereitet. Eine vorschriftkonforme Platzierung in Deutschland bedeutet dabei ein Abstellen eines Warndreiecks in einer Entfernung von 50 m vom abgestellten Fahrzeug innerhalb geschlossener Ortschaften, in einer Entfernung von 100 m vom abgestellten Fahrzeug auf Bundesstraßen und in einer Entfernung von 200 m vom abgestellten Fahrzeug auf Autobahnen. Die Unsicherheit bei einem Abschätzen einer tatsächlichen Entfernung des Warndreieckes vom abgestellten Fahrzeug nimmt dabei mit größer werdender Distanz zu.

Zum anderen ist eine optische Erkennbarkeit eines abgestellten Warndreieckes bei Dämmerung und Dunkelheit oft nur unzureichend, da herkömmlicherweise lediglich passiv leuchtende, als Katzenaugen bezeichnete Reflektionselemente Verwendung finden, die eine Lichtremission nur bei auftreffendem Scheinwerferlicht bewirken.

Die bekannten Warndreieck-Vorrichtungen weisen des Weiteren den Nachteil auf, dass eine automatisierte Assistenz betreffend eine medizinische Versorgung bei einem Unfall verletzter Fahrzeuginsassen oder betreffend eine technische Hilfestellung und im Falle eines Fahrzeugschadens und einer damit notwendig gewordenen Fahrzeugreparatur vor Ort nicht vorgesehen ist.

Aufgabe der Erfindung ist es deshalb, eine Warndreieck-Vorrichtung zu schaffen, mittels derer insbesondere eine adäquat genaue Bestimmung einer tatsächlichen Entfernung zu einem abgestellten Fahrzeug möglich ist und mittels derer die Sicherheit aller Verkehrsteilnehmer erhöht wird.

Des Weiteren soll eine Warndreieck-Vorrichtung geschaffen werden, mittels derer Informationen bezüglich einer notwendig gewordenen Assistenz automatisiert an entfernte Informationsempfänger abgebbar sind.

Des Weiteren soll eine von der erfindungsgemäßen Warndreieck-Vorrichtung gelieferte passive Sicherheit der in einem abgestellten Fahrzeug befindlichen Personen durch verbesserte Erkennbarkeit bei Dämmerung und Dunkelheit erhöht werden.

Für eine Warndreieck-Vorrichtung der eingangs genannten Art wird diese Aufgabe erfindungsgemäß dadurch gelöst, dass eine Distanzmess-Einrichtung zum Messen einer Distanz zwischen einem abgestellten Fahrzeug und dem Warndreieck vorgesehen ist, und an dem Warndreieck eine Anzeigeneinrichtung zum Anzeigen einer Distanz zwischen einem abgestellten Fahrzeug und dem Warndreieck angeordnet ist.

Bevorzugte Ausführungsformen der Erfindung sind Gegenstand der Unteransprüche.

Bei der erfindungsgemäßen Warnschild-Vorrichtung wird durch die Merkmalskombination, dass eine Distanzmess-Einrichtung zum Messen einer Distanz zwischen einem abgestellten Fahrzeug und dem Warndreieck vorgesehen ist, und an dem Warndreieck eine Anzeigeneinrichtung zum Anzeigen einer Distanz zwischen einem abgestellten Fahrzeug und dem Warndreieck angeordnet ist, ein sicheres, schnell ausführbares und gegenüber dem Stand der Technik mit deutlich erhöhter Genauigkeit durchführbares Messen einer Entfernung zwischen einem abgestellten Fahrzeug und einem den Straßenverkehr warnenden Warndreieck ermöglicht ist und ein Warndreieck somit schnell und sicher in korrekt vorgegebener Entfernung zu dem zu schützenden abgestellten Fahrzeug platzierbar ist. Die Anzeigeneinrichtung ist dabei in der Regel im Bereich der Rückfläche des Warndreieckes angebracht.

Gemäß einer ersten bevorzugten Ausführungsform der erfindungsgemäßen Warnschild-Vorrichtung ist vorgesehen, dass eine Aktivierungs-Einrichtung zum Aktivieren der Distanzmess-Einrichtung vorgesehen ist.

Die Aktivierungs-Einrichtung kann dabei in einer sehr einfachen Ausführungsform von einem elektrischen Schalter gebildet sein. Vorzugsweise vollzieht sich eine Aktivierung der Distanzmess-Einrichtung indes automatisiert, insbesondere durch Entnahme des Warndreieckes aus einer Schutzhülle.

Ein derart automatisierter Aktivierungsvorgang der Distanzmess-Einrichtung ist dabei mittels einer Mehrzahl unterschiedlicher Funktionsabläufe durchführbar. Gemäß einer einfachen Ausführungsform kann beispielsweise zwischen einem Punkt im Bereich der Innenfläche der Schutzhülle und einem Punkt an dem Warndreieck ein aus einem leicht reißenden Material hergestellter, elektrisch leitender Draht angebracht sein, bei dessen Durchtrennung im Zusammenhang einer Entnahme des Warndreiecks aus der Schutzhülle eine elektrische Steuerschaltung die Aktivierungs-Einrichtung aktiviert.

Gemäß einer bevorzugten Realisierung einer automatisierten Aktivierung der Distanzmess-Einrichtung ist im Bereich der Innenfläche der Schutzhülle eine einen ersten Permanentmagneten enthaltende erste Magneteinheit befestigt, wobei eine einen zweiten Permanentmagneten enthaltende zweite Magneteinheit mindestens indirekt mit dem Warndreieck verbunden ist. Die Magnete der Magneteinheiten sind dabei derart gepolt angeordnet, dass sich ihre jeweiligen freien Stirnflächen mit vorherbestimmter Kraft anziehen, wobei die Magneteinheiten im Bereich ihrer freien Stirnflächen geformt sind, um unter Krafteinwirkung des ersten und zweiten Magneten eine formschlüssig zusammengefügte, lösbare, elektrisch leitende Einheit zu bilden, die bei Entnahme des Warndreiecks aus der Schutzhülle durch Separation der ersten Magneteinheit von der zweiten Magneteinheit einen zuvor geschlossenen Stromkreis der elektrischen Steuerschaltung unterbricht, woraufhin die elektrische Steuerschaltung die Aktivierungs-Einrichtung der Distanzmess-Einrichtung bewirkt.

Die erste Magneteinheit enthält dabei vorzugsweise mindestens einen Vorsprung, und die zweite Magneteinheit enthält entsprechend mindestens eine an den Vorsprung angepasste Aussparung, um durch Zusammenfügung der Magneteinheiten eine formschlüssig zusammengefügte, lösbare, elektrisch leitende Einheit zu bilden.

Gemäß einer anderen bevorzugten Realisierung einer automatisierten Aktivierung der Distanzmess-Einrichtung ist im Bereich der Innenfläche der Schutzhülle eine einen Permanentmagneten enthaltende Magneteinheit befestigt, und eine die Stärke eines magnetischen Feldes sensierende Hall-Sonde ist mindestens indirekt mit dem Warndreieck verbunden, wobei die Steuerschaltung ausgelegt ist, um bei einer von der Hall-Sonde gemessenen, einen vorgegebenen Schwellenwert übersteigenden Magnetfeldänderung im Zusammenhang mit einer Entnahme des Warndreiecks aus der Schutzhülle die Aktivierungs-Einrichtung bewirkt. Die Magneteinheit und die Hall-Sonde können dabei selbstverständlich gegeneinander ausgetauscht sein. Entsprechend einer weiteren bevorzugten Realisierung einer automatisierten Aktivierung der Distanzmess-Einrichtung enthält das Warndreieck drei mechanisch lösbar fest miteinander verbindbare Schenkel, wobei sich im Zusammenhang mit einer mechanischen Verbindung der drei Schenkel ein elektrischer Kreislauf schließt, über den eine Aktivierung der Distanzmess-Einrichtung erfolgt.

Gemäß der erfindungsgemäßen Warnschild-Vorrichtung ist die Distanzmess-Einrichtung an dem portablen Warndreieck angebracht und enthält einen Beschleunigungssensor, der ab dem Zeitpunkt einer Aktivierung der Distanzmess-Einrichtung Beschleunigungen misst, der der Beschleunigungssensor bei einem Gehen einer das Warndreieck tragenden Person von einem abgestellten Fahrzeug zu einem Abstellort des Warndreieckes ausgesetzt ist. Aufgrund der von dem Beschleunigungssensor gelieferten Beschleunigungsdaten errechnet die Distanzmess-Einrichtung dann die Länge einer seit Aktivierung der Distanzmess-Einrichtung zurückgelegten Strecke.

Alternativ kann die Distanzmess-Einrichtung eine an dem portablen Warndreieck angebrachte GPS-Einheit enthalten, wobei bei Aktivieren der Distanzmess-Einrichtung mittels der Aktivierungs-Einrichtung eine erste Orts-Position gemessen und in einer Speichereinheit gespeichert wird, und wobei diese erste Orts-Position einen Referenzwert für weitere Positionsbestimmungen bildet, die im Wege einer Bewegung des Warndreiecks eingenommen werden, um eine aktuelle Distanz zwischen dem abgestellten Fahrzeug und dem Warndreieck zu ermitteln.

Gemäß einer weiteren alternativen Ausführungsform enthält die Distanzmess-Einrichtung zwei GPS-Einheiten, wobei eine erste GPS-Einheit an einem betreffenden Fahrzeug und eine zweite GPS-Einheit an dem portablen Warndreieck angebracht ist, und wobei sich eine Distanz zwischen dem abgestellten Fahrzeug und dem Warndreieck durch die Distanz zwischen der Position der ersten GPS-Einheit und der zweiten GPS-Einheit ergibt.

Das erfindungsgemäße Warndreieck enthält vorzugsweise zusätzlich zu der einen die jeweilige aktuelle geografische Position ermittelnde GPS-Einheit eine Sendeeinheit zum Übertragen der von der GPS-Einheit ermittelten Positions-Daten. Für eine Aktivierung der Sendeeinheit ist vorzugsweise ein manuell zu betätigender Schalter vorgesehen, dessen Aktivierung ein Aussenden von mittels der GPS-Einheit ermittelten Positions-Daten bewirkt. Alternativ oder zusätzlich kann eine automatisierte Aktivierung der Distanzmess-Einrichtung und/oder der Sendeeinheit mittels eines Impulssensors erfolgen, sobald dieser einen Stoß sensiert, dessen Intensität oberhalb eines vorgegebenen Schwellenwertes liegt.

Die Distanzmess-Einrichtung enthält des Weiteren ein an dem portablen Warndreieck angebrachtes Gyroskop zum Feststellen der Änderung einer räumlichen Orientierung des Warndreieckes.

Als alternative Ausführungsform kann die Distanzmess-Einrichtung einen Radar-Sensor zum Feststellen einer Entfernung zwischen einem betreffenden Fahrzeug und dem Warndreieck enthalten.

Vorzugsweise sind die an dem Warndreieck angebrachten elektrischen und elektronischen Einheiten zum Zweck einer Versorgung mit elektrischem Strom mit einem direkt an dem Warndreieck angebrachten elektrischen Stromspeicher verbunden, wobei als Stromspeicher eine LiSOCl2-Batterie favorisiert ist.

Die Sendeeinheit ist vorzugsweise ausgelegt, um einen die geografische Position enthaltenden automatisierten Notruf gemäß dem GSM Standard abzugeben. Zu diesem Zweck ist die Sendeeinheit vorzugsweise mit einer Speichereinheit zum Speichern vorherbestimmter Nachrichten und mit einer Speichereinheit zum Speichern von Telefonnummern vorherbestimmter Teilnehmer verbunden und dabei ausgelegt, um in dem GSM Standard einen die geografische Position enthaltenden automatisierten Notruf an eine oder mehr der gespeicherten Telefonnummern abzugeben. In der Speichereinheit können beispielsweise die Telefonnummern 112 sowie des ADAC, regionaler Notdienste sowie von Pannendiensten der Premium-Automarken gespeichert sein.

Des Weiteren kann an oder in dem Warndreieck ein Mobiltelefon untergebracht sein, wobei das Warndreieck im Bereich zumindest einer seiner Außenflächen mit einem Mikrofon, einem Außenlautsprecher sowie einer Tastatur für Zahlen und Buchstaben versehen sein kann, um eine bidirektionale Telefonverbindung zu ermöglichen.

Gemäß einer weiteren wichtigen bevorzugten Ausführungsform der erfindungsgemäßen Warnschild-Vorrichtung sind im Bereich zumindest eines Teils der grafischen Gestaltung der Oberfläche des Warndreieckes mit der Stromquelle verbindbare LED-Leuchtelemente vorgesehen. Gemäß bevorzugter Ausführung ist dabei im Bereich der Oberfläche des Warndreieckes ein einen Helligkeitswert des ambienten Tageslichtes sensierender Lichtsensor vorgesehen, der mit einer elektronischen Steuerschaltung zum Ein- und Ausschalten sowie zum Regeln einer Helligkeit der LED-Leuchtelemente verbunden ist.

Des Weiteren ist die Steuerschaltung vorzugsweise ausgelegt, um bei Unterschreiten eines in einer elektronischen Speichereinheit gespeicherten vorgebbaren Helligkeitswertes des ambienten Tageslichtes einen Einschaltvorgang der LED-Leuchtelemente auszulösen und bei Überschreiten des vorgebbaren Helligkeitswertes des ambienten Tageslichtes einen Ausschaltvorgang der LED-Leuchtelemente zu bewirken.

Um die Wahrnehmung des erfindungsgemäßen Warndreieck unter allen denkbaren Witterungsverhältnissen zu optimieren, ist die Steuerschaltung auch ausgelegt, um bei Unterschreiten mindestens eines weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu erhöhen und bei Überschreiten mindestens eines anderen weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu mindern.

Die Oberfläche des erfindungsgemäßen Warndreieckes ist entsprechend einer farblichen Gestaltung gemäß den Vorgaben der gesetzlichen Normen ausgelegt, wobei die LED-Leuchtelemente vorzugsweise im Bereich eines betreffenden roten Dreiecks angeordnet sind und rotes Licht aussenden, um sicherzustellen, dass die LED-Leuchtelemente Licht mit einer Farbe aussenden, die im Wesentlichen der Farbgebung der betreffenden Bereiche der farblichen Gestaltung der Oberfläche des Warndreieckes entspricht.

Die Oberfläche des Warndreiecks ist im Bereich der farblichen Gestaltung des Warndreiecks vorzugsweise mit einer Mehrzahl von Aussparungen versehen, wobei die Leuchtelemente unterhalb jeweiliger Aussparungen angeordnet sind, um in leuchtendem Zustand Licht durch eine betreffende Aussparung zu senden.

Die erfindungsgemäße Warndreieck-Vorrichtung wird im Folgenden anhand einer bevorzugten Ausführungsform erläutert, die in den Figuren der Zeichnung dargestellt ist. Darin zeigen:
- Fig.1: eine bevorzugte Ausführungsform der erfindungsgemäßen Warndreieck-Vorrichtung in einer Ansicht von vorne;

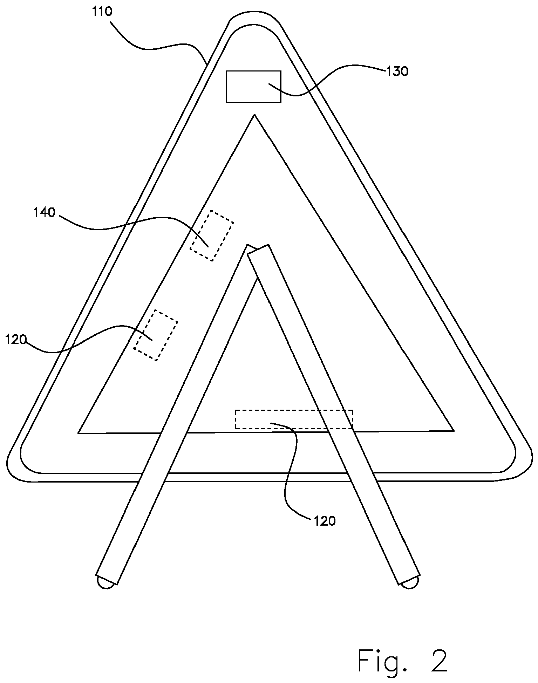

- Fig.2: die in Figur 1 dargestellte bevorzugte Ausführungsform der erfindungsgemäßen Warndreieck-Vorrichtung in einer Ansicht von hinten.
- Fig. 3: die in Figur 1 dargestellte bevorzugte Ausführungsform der erfindungsgemäßen Warndreieck-Vorrichtung in einer Querschnittsansicht.

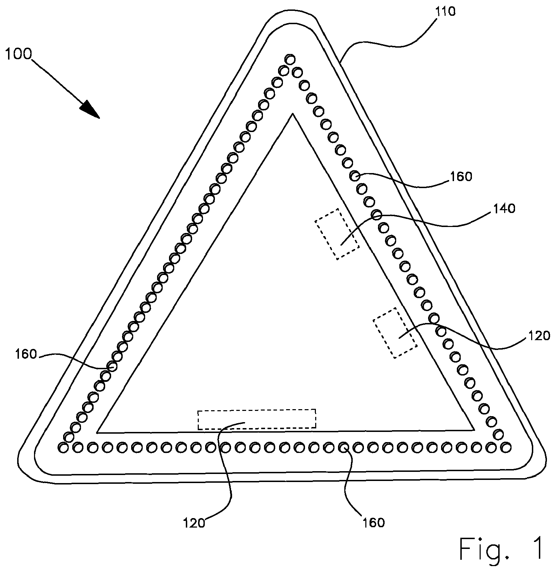

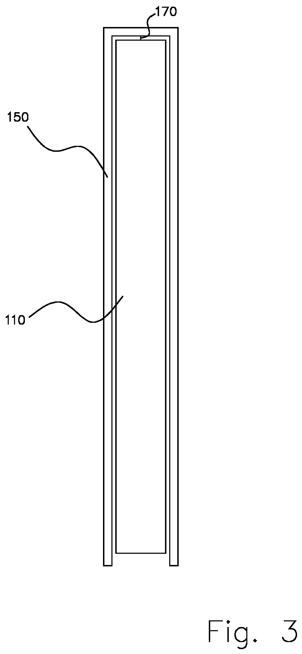

Die in den Figuren 1 und 3 dargestellte erfindungsgemäße Warndreieck-Vorrichtung 100 enthält ein portables Warndreieck 110 mit einer grafisch entsprechend den Vorgaben der gesetzlichen Normen gestalteten Oberfläche, wobei eine Distanzmess-Einrichtung 120 zum Messen einer Distanz zwischen einem abgestellten Fahrzeug und dem Warndreieck vorgesehen ist, und im Bereich der Rückfläche des Warndreieckes 110 eine digitale Anzeigeneinrichtung 130 zum Anzeigen einer Distanz zwischen einem abgestellten Fahrzeug und dem Warndreieck 110 angeordnet ist.

Eine Aktivierungs-Einrichtung 140 zum automatisierten Aktivieren der Distanzmess-Einrichtung 120 ist bei Entnahme des Warndreieckes 110 aus einer Schutzhülle 150 aktivierbar.

Zu diesem Zweck ist im Bereich der Innenfläche der Schutzhülle 150 eine einen Permanentmagneten enthaltende Magneteinheit befestigt und eine die Stärke eines magnetischen Feldes sensierende Hall-Sonde ist mit dem Warndreieck 110 verbunden, wobei die Steuerschaltung ausgelegt ist, um bei einer von der Hall-Sonde gemessenen, einen vorgegebenen Schwellenwert übersteigenden Magnetfeldänderung im Zusammenhang mit einer Entnahme des Warndreiecks 110 aus der Schutzhülle 150 die Aktivierungs-Einrichtung 140 auszulösen.

Die Distanzmess-Einrichtung 120 enthält eine an dem portablen Warndreieck 110 angebrachte GPS-Einheit, wobei bei Aktivieren der Distanzmess-Einrichtung 120 mittels der Aktivierungs-Einrichtung 140 eine erste Orts-Position gemessen und in einer Speichereinheit gespeichert wird, und wobei diese erste Orts-Position einen Referenzwert für weitere Positionsbestimmungen bildet, die im Wege einer Bewegung des Warndreiecks 110 eingenommen werden, um eine aktuelle Distanz zwischen dem abgestellten Fahrzeug und dem Warndreieck 110 zu ermitteln.

Das Warndreieck 110 enthält zusätzlich zu der die jeweilige aktuelle geografische Position ermittelnden GPS-Einheit eine Sendeeinheit zum Übertragen der von der GPS-Einheit ermittelten Positions-Daten. Des Weiteren ist ein manuell zu betätigender Schalter vorgesehen, dessen Aktivierung ein Aussenden von mittels der GPS-Einheit ermittelten Positions-Daten bewirkt.

Die an dem Warndreieck 110 angebrachten elektrischen und elektronischen Einheiten sind zum Zweck einer Versorgung mit elektrischem Strom mit einem an dem Warndreieck 110 angebrachten elektrischen Stromspeicher verbunden, wobei der Stromspeicher von einer LiSOCl2-Batterie gebildet ist.

Die Sendeeinheit ist ausgelegt, um einen die geografische Position enthaltenden automatisierten Notruf gemäß dem GSM Standard abzugeben. Zu diesem Zweck ist die Sendeeinheit mit einer Speichereinheit zum Speichern vorherbestimmter Nachrichten und mit einer Speichereinheit zum Speichern von Telefonnummern vorherbestimmter Teilnehmer verbunden und ausgelegt, um in dem GSM Standard einen die geografische Position enthaltenden automatisierten Notruf an eine oder mehr der gespeicherten Telefonnummern abzugeben. In der Speichereinheit sind die Telefonnummern 112 sowie des ADAC, regionaler Notdienste sowie von Pannendiensten der Premium-Automarken gespeichert.

Um eine Erkennbarkeit eines entfernt von einem abgestellten Fahrzeug positionierten erfindungsgemäßen Warndreiecks 110 auch bei Dunkelheit, Regen und Nebel zu gewährleisten, sind im Bereich eines Teils der grafischen Gestaltung der Oberfläche des Warndreieckes 110 mit der Stromquelle verbindbare LED-Leuchtelemente 160 vorgesehen.

Im Bereich der Oberfläche des Warndreieckes 110 ist ein einen Helligkeitswert des ambienten Tageslichtes sensierender Lichtsensor vorgesehen, der mit einer elektronischen Steuerschaltung zum Ein- und Ausschalten sowie zum Regeln einer Helligkeit der LED-Leuchtelemente 160 verbunden ist.

Die Steuerschaltung ist dabei ausgelegt, um bei Unterschreiten eines in einer elektronischen Speichereinheit gespeicherten vorgebbaren Helligkeitswertes des ambienten Tageslichtes einen Einschaltvorgang der LED-Leuchtelemente 160 auszulösen und bei Überschreiten des vorgebbaren Helligkeitswertes des ambienten Tageslichtes einen Ausschaltvorgang der LED-Leuchtelemente 160 zu bewirken.

Die Steuerschaltung ist des Weiteren ausgelegt, um bei Unterschreiten mindestens eines weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu erhöhen und bei Überschreiten mindestens eines anderen weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu mindern.

Die Oberfläche des Warndreieckes 110 ist entsprechend einer farblichen Gestaltung gemäß den Vorgaben der gesetzlichen Normen ausgeführt, wobei die LED-Leuchtelemente 160 im Bereich eines betreffenden roten Dreiecks angeordnet sind und rotes Licht aussenden.

Die Oberfläche des Warndreiecks 110 ist im Bereich der farblichen Gestaltung des Warndreiecks 110 mit einer Mehrzahl von Aussparungen versehen, wobei die Leuchtelemente 160 unterhalb jeweiliger Aussparungen angeordnet sind, um in leuchtendem Zustand Licht durch eine betreffende Aussparung zu senden.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Warndreieck-Vorrichtung (100) mit einem portablen Warndreieck (110) mit einer grafisch entsprechend den Vorgaben der gesetzlichen Normen gestalteten Oberfläche, wobei eine Distanzmess-Einrichtung (120) zum Messen einer Distanz zwischen einem abgestellten Fahrzeug und dem Warndreieck (110) vorgesehen ist, und im Bereich der Rückfläche des Warndreieckes (110) eine Anzeigeneinrichtung (130) zum Anzeigen einer Distanz zwischen einem abgestellten Fahrzeug und dem Warndreieck (110) angeordnet ist, **dadurch gekennzeichnet, dass** die Distanzmess-Einrichtung (120) an dem portablen Warndreieck (110) angebracht ist und einen Beschleunigungssensor enthält, der ab dem Zeitpunkt einer Aktivierung der Distanzmess-Einrichtung (120) Beschleunigungen misst, denen der Beschleunigungssensor bei einem Gehen einer das Warndreieck (110) tragenden Person von einem abgestellten Fahrzeug zu einem Abstellort des Warndreieckes (110) ausgesetzt ist, und die Distanzmess-Einrichtung (120) des Weiteren ein an dem portablen Warndreieck (110) angebrachtes Gyroskop zum Feststellen der Änderung einer räumlichen Orientierung des Warndreieckes (110) enthält.

2. Vorrichtung nach Anspruch 1, **dadurch gekennzeichnet, dass** eine Aktivierungs-Einrichtung (140) zum Aktivieren der Distanzmess-Einrichtung (120) vorgesehen ist.

3. Vorrichtung nach Anspruch 2, **dadurch gekennzeichnet, dass** die Aktivierungs-Einrichtung (140) durch Entnahme des Warndreieckes (110) aus einer Schutzhülle (150) aktivierbar ist.

4. Vorrichtung nach Anspruch 3, **dadurch gekennzeichnet, dass** zwischen einem Punkt im Bereich der Innenfläche der Schutzhülle (150) und einem Punkt an dem Warndreieck (110) ein aus einem leicht reißenden Material hergestellter, elektrisch leitender Draht (170) angebracht ist, bei dessen Durchtrennung im Zusammenhang einer Entnahme des Warndreiecks (110) aus der Schutzhülle (150) eine elektrische Steuerschaltung die Aktivierungs-Einrichtung (140) aktiviert.

5. Vorrichtung nach Anspruch 3, **dadurch gekennzeichnet, dass** im Bereich der Innenfläche der Schutzhülle (150) eine einen ersten Permanentmagneten enthaltende erste Magneteinheit befestigt ist und eine einen zweiten Permanentmagneten enthaltende zweite Magneteinheit mindestens indirekt mit dem Warndreieck (110) verbunden ist, wobei die Magnete der Magneteinheiten derart gepolt angeordnet sind, dass sich ihre jeweiligen freien Stirnflächen mit vorherbestimmter Kraft anziehen, wobei die Magneteinheiten im Bereich ihrer freien Stirnflächen geformt sind, um unter Krafteinwirkung des ersten und zweiten Magneten eine formschlüssig zusammengefügte, lösbare, elektrisch leitende Einheit zu bilden, die bei Entnahme des Warndreiecks (110) aus der Schutzhülle (150) durch Separation der ersten Magneteinheit von der zweiten Magneteinheit einen zuvor geschlossenen Stromkreis der elektrischen Steuerschaltung unterbricht, woraufhin die elektrische Steuerschaltung die Aktivierungs-Einrichtung (140) der Distanzmess-Einrichtung (120) bewirkt.

6. Vorrichtung nach Anspruch 5, **dadurch gekennzeichnet, dass** die erste Magneteinheit mindestens einen Vorsprung enthält und die zweite Magneteinheit mindestens eine an den Vorsprung angepasste Aussparung enthält, um durch Zusammenfügung der Magneteinheiten eine formschlüssig zusammengefügte, lösbare, elektrisch leitende Einheit zu bilden.

7. Vorrichtung nach Anspruch 3, **dadurch gekennzeichnet, dass** im Bereich der Innenfläche der Schutzhülle (150) eine einen Permanentmagneten enthaltende Magneteinheit befestigt ist und eine die Stärke eines magnetischen Feldes sensierende Hall-Sonde mindestens indirekt mit dem Warndreieck (110) verbunden ist, wobei die Steuerschaltung ausgelegt ist, um bei einer von der Hall-Sonde gemessenen, einen vorgegebenen Schwellenwert übersteigenden Magnetfeldänderung im Zusammenhang mit einer Entnahme des Warndreiecks (110) aus der Schutzhülle (150) die Aktivierungs-Einrichtung (140) zu bewirken.

8. Vorrichtung nach Anspruch 7, **dadurch gekennzeichnet, dass** Magneteinheit und Hall-Sonde gegeneinander ausgetauscht sind.

9. Vorrichtung nach Anspruch 2, **dadurch gekennzeichnet, dass** das Warndreieck (110) drei mechanisch lösbar fest miteinander verbindbare Schenkel enthält, wobei sich im Zusammenhang mit einer mechanischen Verbindung der drei Schenkel ein elektrischer Kreislauf schließt, über den eine Aktivierung der Distanzmess-Einrichtung (120) erfolgt.

10. Vorrichtung nach einem der vorhergehenden Ansprüche, **dadurch gekennzeichnet, dass** das Warndreieck (110) eine die jeweilige aktuelle geografische Position ermittelnde GPS-Einheit sowie eine Sendeeinheit zum Übertragen der von der GPS-Einheit ermittelten Positions-Daten enthält.

11. Vorrichtung nach Anspruch 10, **dadurch gekennzeichnet, dass** ein manuell zu betätigender Schalter vorgesehen ist, dessen Aktivierung ein Aussenden von mittels der GPS-Einheit ermittelten Positions-Daten bewirkt.

12. Vorrichtung nach einem der Ansprüche 10 oder 11, **dadurch gekennzeichnet, dass** eine automatisierte Aktivierung der Distanzmess-Einrichtung (120) und/oder der Sendeeinheit mittels eines Impulssensors erfolgen, sobald dieser einen Stoß sensiert, dessen Intensität oberhalb eines vorgegebenen Schwellenwertes liegt.

13. Vorrichtung nach einem der vorhergehenden Ansprüche, **dadurch gekennzeichnet, dass** die Distanzmess-Einrichtung (120) einen Radar-Sensor zum Feststellen einer Entfernung zwischen einem betreffenden Fahrzeug und dem Warndreieck (110) enthält.

14. Vorrichtung nach einem der vorhergehenden Ansprüche, **dadurch gekennzeichnet, dass** die an dem Warndreieck (110) angebrachten elektrischen und elektronischen Einheiten zum Zweck einer Versorgung mit elektrischem Strom mit einem an dem Warndreieck (110) angebrachten elektrischen Stromspeicher verbunden sind.

15. Vorrichtung nach Anspruch 14, **dadurch gekennzeichnet, dass** der Stromspeicher von einer LiSOCl2-Batterie gebildet ist.

16. Vorrichtung nach einem der vorhergehenden Ansprüche, **dadurch gekennzeichnet, dass** die Sendeeinheit ausgelegt ist, um einen die geografische Position enthaltenden automatisierten Notruf gemäß dem GSM Standard abzugeben.

17. Vorrichtung nach Anspruch 16, **dadurch gekennzeichnet, dass** die Sendeeinheit mit einer Speichereinheit zum Speichern vorherbestimmter Nachrichten und mit einer Speichereinheit zum Speichern von Telefonnummern vorherbestimmter Teilnehmer verbunden ist und ausgelegt ist, um in dem GSM Standard einen die geografische Position enthaltenden automatisierten Notruf an eine oder mehr der gespeicherten Telefonnummern abzugeben.

## Claims

1. Warning triangle device (100) having a portable warning triangle (110) with a surface graphically designed according to the specifications of the legal standards, wherein a distance measuring device (120) for measuring a distance between a parked vehicle and the warning triangle (110) is provided, and a display device (130) for displaying a distance between a parked vehicle and the warning triangle (110) is arranged in the region of the rear surface of the warning triangle (110), **characterized in that** the distance measuring device (120) is fitted to the portable warning triangle (110) and contains an acceleration sensor which, as of the time at which the distance measuring device (120) is activated, measures accelerations to which the acceleration sensor is exposed when a person carrying the warning triangle (110) walks from a parked vehicle to a placement location of the warning triangle (110), and the distance measuring device (120) also contains a gyroscope which is fitted to the portable warning triangle (110) and is intended to determine the change in a spatial orientation of the warning triangle (110).

2. Device according to Claim 1, **characterized in that** an activation device (140) for activating the distance measuring device (120) is provided.

3. Device according to Claim 2, **characterized in that** the activation device (140) can be activated by removing the warning triangle (110) from a protective cover (150).

4. Device according to Claim 3, **characterized in that** an electrically conductive wire (170) produced from an easy-tear material is fitted between a point in the region of the inner surface of the protective cover (150) and a point on the warning triangle (110), upon the severing of which wire, in connection with removal of the warning triangle (110) from the protective cover (150), an electrical control circuit activates the activation device (140).

5. Device according to Claim 3, **characterized in that** a first magnetic unit containing a first permanent magnet is fastened in the region of the inner surface of the protective cover (150) and a second magnetic unit containing a second permanent magnet is at least indirectly connected to the warning triangle (110), wherein the magnets of the magnetic units are arranged in a poled manner such that their respective free end faces are attracted with a predetermined force, wherein the magnetic units are shaped in the region of their free end faces in order to form a releasable electrically conductive unit joined together in a form-fitting manner with the application of force by the first and second magnets, which unit, upon the removal of the warning triangle (110) from the protective cover (150), interrupts a previously closed circuit of the electrical control circuit by separating the first magnetic unit from the second magnetic unit, whereupon the electrical control circuit triggers the activation device (140) of the distance measuring device (120).

6. Device according to Claim 5, **characterized in that** the first magnetic unit contains at least one projection and the second magnetic unit contains at least one recess matched to the projection in order to form a releasable electrically conductive unit joined together in a form-fitting manner by joining together the magnetic units.

7. Device according to Claim 3, **characterized in that** a magnetic unit containing a permanent magnet is fastened in the region of the inner surface of the protective cover (150) and a Hall probe sensing the strength of a magnetic field is at least indirectly connected to the warning triangle (110), wherein the control circuit is designed to trigger the activation device (140) in the case of a magnetic field change which is measured by the Hall probe and exceeds a predefined threshold value in connection with removal of the warning triangle (110) from the protective cover (150) .

8. Device according to Claim 7, **characterized in that** the magnetic unit and the Hall probe are interchanged with one another.

9. Device according to Claim 2, **characterized in that** the warning triangle (110) contains three limbs which can be firmly connected to one another in a mechanically releasable manner, wherein an electrical circuit which is used to activate the distance measuring device (120) is closed in connection with a mechanical connection of the three limbs.

10. Device according to one of the preceding claims, **characterized in that** the warning triangle (110) contains a GPS unit determining the respective current geographical position and a transmitting unit for transmitting the position data determined by the GPS unit.

11. Device according to Claim 10, **characterized in that** a switch which can be manually actuated is provided, the activation of which switch causes position data determined by means of the GPS unit to be emitted.

12. Device according to either of Claims 10 and 11, **characterized in that** the distance measuring device (120) and/or the transmitting unit is/are activated in an automated manner by means of a pulse sensor as soon as the latter senses an impact, the intensity of which is above a predefined threshold value.

13. Device according to one of the preceding claims, **characterized in that** the distance measuring device (120) contains a radar sensor for determining a distance between a relevant vehicle and the warning triangle (110).

14. Device according to one of the preceding claims, **characterized in that** the electrical and electronic units fitted to the warning triangle (110) are connected to an electrical power store fitted to the warning triangle (110) for the purpose of a supply with electrical power.

15. Device according to Claim 14, **characterized in that** the power store is formed by an LiSOC12 battery.

16. Device according to one of the preceding claims, **characterized in that** the transmitting unit is designed to make an automated emergency call containing the geographical position according to the GSM standard.

17. Device according to Claim 16, **characterized in that** the transmitting unit is connected to a storage unit for storing predetermined messages and to a storage unit for storing telephone numbers of predetermined subscribers and is designed to make an automated emergency call containing the geographical position to one or more of the stored telephone numbers in the GSM standard.

## Revendications

1. Dispositif de triangle de signalisation (100) comprenant un triangle de signalisation (110) portable ayant une surface graphiquement réalisée conformément aux spécifications des normes légales, cependant qu'un équipement de mesure de distance (120) destiné à la mesure d'une distance entre un véhicule stationné et le triangle de signalisation (110) est prévu, et que, dans la zone de la face arrière du triangle de signalisation (110), un équipement indicateur (130) destiné à indiquer une distance entre un véhicule stationné et le triangle de signalisation (110) est agencé, **caractérisé en ce que** l'équipement de mesure de distance (120) est placé sur le triangle de signalisation (110) portable et comporte un accéléromètre qui, à partir du moment d'une activation de l'équipement de mesure de distance (120), mesure des accélérations auxquelles est soumis l'accéléromètre lors d'une marche d'une personne portant le triangle de signalisation (110) d'un véhicule stationné à un endroit de dépose du triangle de signalisation (110), et que l'équipement de mesure de distance (120) comporte en outre un gyroscope placé sur le triangle de signalisation (110) portable et destiné à la constatation d'une modification d'une orientation spatiale du triangle de signalisation (110).

2. Dispositif selon la revendication 1, **caractérisé en ce qu'**un équipement d'activation (140) destiné à l'activation de l'équipement de mesure de distance (120) est prévu.

3. Dispositif selon la revendication 2, **caractérisé en ce que** l'équipement d'activation (140) peut être activé par enlèvement du triangle de signalisation (110) de son enveloppe de protection (150).

4. Dispositif selon la revendication 3, **caractérisé en ce que**, entre un point situé dans la zone de la face intérieure de l'enveloppe de protection (150) et un point situé sur le triangle de signalisation (110), un fil électriquement conducteur (170) fabriqué à partir d'un matériau se rompant facilement est placé, lors du sectionnement duquel, en relation avec un enlèvement du triangle de signalisation (110) de l'enveloppe de protection (150), un circuit électrique de commande active l'équipement d'activation (140).

5. Dispositif selon la revendication 3, **caractérisé en ce que**, dans la zone de la face intérieure de l'enveloppe de protection (150), une première unité magnétique, comportant un premier aimant permanent, est fixée, et une deuxième unité magnétique, comportant un deuxième aimant permanent, est reliée au moins indirectement au triangle de signalisation (110), cependant que les aimants des unités magnétiques sont agencés de manière polarisée de telle façon que leurs faces frontales respectivement libres s'attirent avec une force prédéterminée, cependant que les unités magnétiques sont, dans la zone de leurs faces frontales libres, modelées pour, sous l'action de la force du premier et du deuxième aimant, constituer une unité électriquement conductrice amovible assemblée par liaison de forme qui, lors d'un enlèvement du triangle de signalisation (110) de l'enveloppe de protection (150). interrompt par séparation de la première unité magnétique et de la deuxième unité magnétique un circuit électrique auparavant fermé du circuit électrique de commande, à la suite de quoi le circuit électrique de commande déclenche l'équipement d'activation (140) de l'équipement de mesure de distance (120).

6. Dispositif selon la revendication 5, **caractérisé en ce que** la première unité magnétique comporte au moins une proéminence et que la deuxième unité magnétique comporte au moins un évidement adapté à la proéminence afin de, par assemblage des unités magnétiques, constituer une unité électriquement conductrice amovible assemblée par liaison de forme.

7. Dispositif selon la revendication 3, **caractérisé en ce que**, dans la zone de la face intérieure de l'enveloppe de protection (150), une unité magnétique comportant un aimant permanent est fixée et une sonde à effet Hall détectant l'intensité d'un champ magnétique est reliée au moins indirectement au triangle de signalisation (110), cependant que le circuit de commande est conçu pour, lors d'une modification du champ magnétique, mesurée par la sonde à effet Hall et dépassant une valeur seuil prédéfinie, en relation avec un enlèvement du triangle de signalisation (110) de l'enveloppe de protection (150), déclencher l'équipement d'activation (140).

8. Dispositif selon la revendication 7, **caractérisé en ce que** l'unité magnétique et la sonde à effet Hall sont permutées.

9. Dispositif selon la revendication 2, **caractérisé en ce que** le triangle de signalisation (110) comporte trois branches pouvant être reliées fermement ensemble de manière mécaniquement amovible, cependant que, en relation avec une jonction mécanique des trois branches, un circuit électrique se ferme, par l'intermédiaire duquel une activation de l'équipement de mesure de distance (120) a lieu.

10. Dispositif selon une des revendications précédentes, **caractérisé en ce que** le triangle de signalisation (110) comporte une unité GPS déterminant la position géographique respectivement actuelle ainsi qu'une unité émettrice pour la transmission des données de position déterminées par l'unité GPS.

11. Dispositif selon la revendication 10, **caractérisé en ce qu'**un commutateur à actionnement manuel est prévu, dont l'activation déclenche l'envoi de données de position déterminées au moyen de l'unité GPS.

12. Dispositif selon une des revendications 10 ou 11, **caractérisé en ce qu'**une activation automatisée de l'équipement de mesure de distance (120) et/ou de l'unité émettrice ont lieu au moyen d'un capteur d'impulsion dès que ce dernier détecte une secousse dont l'intensité se situe au-dessus d'une valeur seuil prédéfinie.

13. Dispositif selon une des revendications précédentes, **caractérisé en ce que** l'équipement de mesure de distance (120) comporte un capteur radar pour constater une distance entre un véhicule concerné et le triangle de signalisation (110).

14. Dispositif selon une des revendications précédentes, **caractérisé en ce que** les unités électriques et électroniques placées sur le triangle de signalisation (110) sont, aux fins d'une alimentation en courant électrique, reliées à une batterie électrique de stockage placée sur le triangle de signalisation (110).

15. Dispositif selon la revendication 14, **caractérisé en ce que** la batterie de stockage est constituée par une pile LiSOC12.

16. Dispositif selon une des revendications précédentes, **caractérisé en ce que** l'unité émettrice est conçue pour émettre un appel de détresse automatisé contenant la position géographique conformément au standard GSM.

17. Dispositif selon la revendication 16, **caractérisé en ce que** l'unité émettrice est reliée avec une unité de mémorisation pour la mémorisation de messages prédéterminés, et avec une unité de mémorisation pour la mémorisation de numéros de téléphone d'usagers prédéterminés, et est conçue pour émettre dans le standard GSM un appel de détresse automatisé, contenant la position géographique, à un ou plusieurs des numéros de téléphone mémorisés.
